# EUROPEAN PATENT SPECIFICATION

(11) **EP 1 190 185 B1**
(45) Date of publication and mention of the grant of the patent: **08.01.2003**
(21) Application number: 00940581.2
(22) Date of filing: 21.06.2000
(51) Int. Cl.: F16G 1/00

(54) **CABLE ANCHORING DEVICE**
KABELVERBINDER
DISPOSITIF D'ANCRAGE POUR CABLE

(30) Priority: 26.06.1999 GB 9914880
(43) Date of publication of application: 27.03.2002
(73) Proprietor: ADWEST BOWDEN TSK LIMITED, Carmarthenshire SA14 9TF (GB)
(72) Inventor: JONES, Stuart, Terry, Swansea, West Glamorgan (GB)
(74) Representative: Butler, Lance
(86) International application number: GB0002406
(87) International publication number: WO01001014

(56) References cited:
- EP-A- 0 234 814
- DE-A- 4 010 130
- US-A- 4 131 379
- US-A- 4 585 369
- US-A- 4 733 442
- US-A- 4 834 571
- US-A- 4 887 929

## Description

This invention relates to means for anchoring an elongate member to another member. Such a means is known from document DE-A-4 010 130.

The present invention has particular reference to the anchoring of Bowden-type cables to fixed parts of the chassis or bodywork of an automobile, and the invention will be described in that context in this specification. It will, however, be appreciated that such an anchoring member can be used for anchoring many other elongate members, and in many other circumstances.

As is well known, a Bowden-type cable is a device for translating a push/pull movement at one location to a push/pull movement (in the same or any different direction) at another location, often for control purposes, and such a cable comprises a flexible conduit in which a control wire is slidable to perform the desired function. In order for the relative movement of the control wire and the conduit to take place in a controlled manner for the reliable operation of, for example, a clutch or gearbox mechanism or throttle of a motor vehicle, it is necessary that each end of the conduit should be anchored, for example to the body of the vehicle. In particular, the practice has developed of anchoring an end of the conduit to an opening in a bracket or bulkhead across or through which the control cable passes.

In a particular arrangement which is known for this purpose, the bracket or bulkhead is provided with a generally circular hole near one edge, the hole being connected to that edge by a slot or channel whose width is less than the diameter of the circular hole (that edge of a bulkhead may be a peripheral edge, or it may be an edge of another, larger hole formed within the bulkhead). The effect is thus to provide a slot having undercut walls in an edge of the bulkhead, and in fact the profile of the slot may take the general form of a keyhole or of the Greek capital letter Ω (omega), though the neck need only be about 5% narrower than the diameter of the circular undercut for effective anchoring.

An anchoring sleeve or end fitting for the Bowden-type cable may comprise a neck of a diameter which will pass into or along the channel or slot, in a direction which is parallel to a plane of the bracket or bulkhead and perpendicular to the axis of the cable; and the anchoring device may include a collar which may be slid or screwed axially of the anchor fitting to cause filling of the circular undercut of the slot and thus resist unintentional withdrawal of the anchor from the slot and also axial movement of the anchorage device relative to that slot.

However, in cases where the hole has no access channel leading from an edge of the plate, there is a requirement for a different kind of anchorage device which can be partially inserted into the hole and then locked to the plate, preferably in a manner which provides also for subsequent unlocking and disengagement of the anchoring device from the hole. A particular advantage is gained if the device can be fitted to a bracket or bulkhead plate quickly and easily, with the possibility of error being minimised.

According to the invention there is provided a device which may be employed for anchoring a cable element so that it is temporarily fixed longitudinally in a hole in a plate element, the anchorage device including a generally cylindrical main body defining a hollow open ended bore in which a cable element is adapted to be fixed and held against longitudinal movement, the main body having a number of projecting fingers arranged around the bore, which fingers can be deflected inwardly of the bore to allow the fingers to be inserted into the hole in the plate and the fingers having outer surface regions shaped to define an annular recess in which can be engaged edge portions of the hole in the plate after insertion of the fingers in the hole, the anchorage further including a locking sleeve which is axially movable into and out of a location which is immediately behind the insides of the fingers such as to prevent the inward deflection of the fingers thereby preventing the recessed outer surface regions on the fingers from being disengaged from the edge portions of the hole.

The locking sleeve is preferably spring biased towards its locking location directly behind the fingers so as to prevent their inward deflection, and the sleeve is movable axially out of its locking location and, into a 'cocked' location, against the influence of the spring which is preferably a coil spring. The locking sleeve may be temporarily held in the 'cocked' location by means of flexible catches which removably engage detents in the main body. Such detents may be in the form of apertures located in the annular recess defined by the outside surfaces of the fingers, and when wall regions of the plate hole are seated in the recess this may be effective to displace the catches from engagement in the detent apertures thus freeing the locking sleeve to move towards its locking location as urged by the spring.

The locking sleeve is provided with a coaxial outer sleeve to which it is connected by radially extending struts which extend through and are movable along axially extending slots which exist between the fingers of the main body. The spring means may comprise a coil spring acting on the outer sleeve and acting between the latter and an abutment on the main body.

By way of example only, one embodiment of anchorage device according to the invention is described below with reference to the accompanying drawings in which:
Figure 1a is an external side view of the main body component of the device;
Figure 1b is an end view on the arrow A in Figure 1;
Figure 1c is a cross-sectional view on the line C-C in Figure 1b;
Figure 1d is a cross-sectional view on the line D-D in Figure 1b;
Figure 2a is a perspective view of the locking sleeve component of the device;
Figure 2b is an end view on the arrow E in Figure 2a;
Figure 2c is a side view of the component shown in Figure 2a;
Figure 2d is a cross-sectional view on the line F-F in Figure 2b;
Figure 2e is a cross-sectional view on the line G-G in Figure 2b;
Figure 3a is a half-sectional side view of the device in the locked position;
Figure 3b is a half-sectional side view of the device in the cocked position;
Figure 3c is an external perspective view corresponding to Figure 3b; and
Figure 3d is an external perspective view corresponding to Figure 3a.

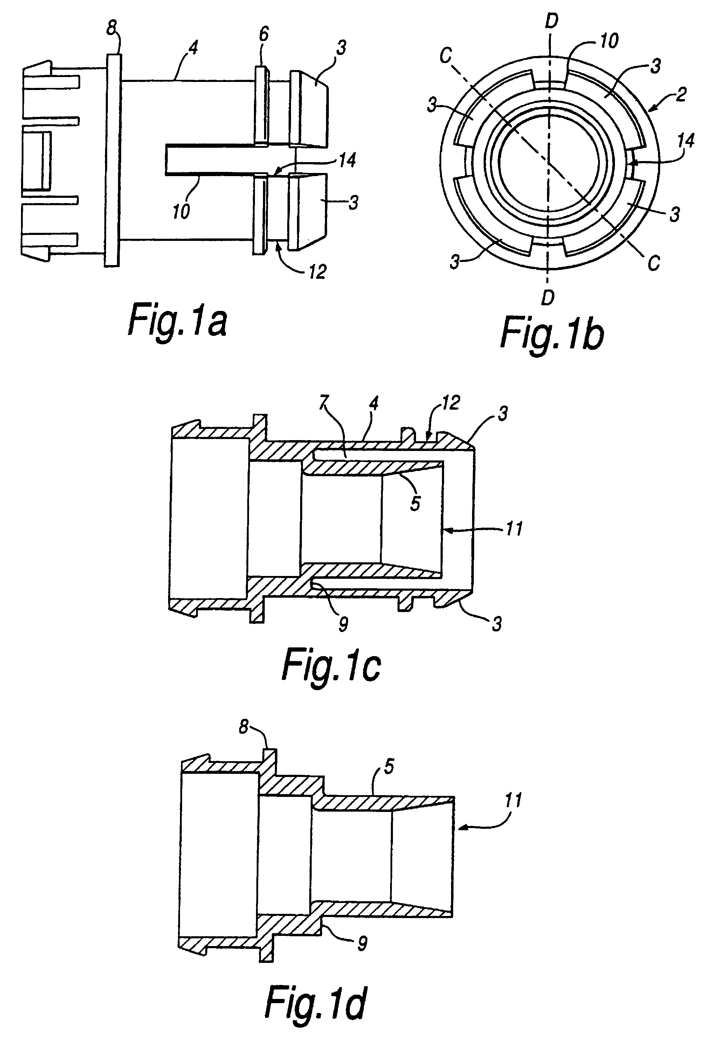

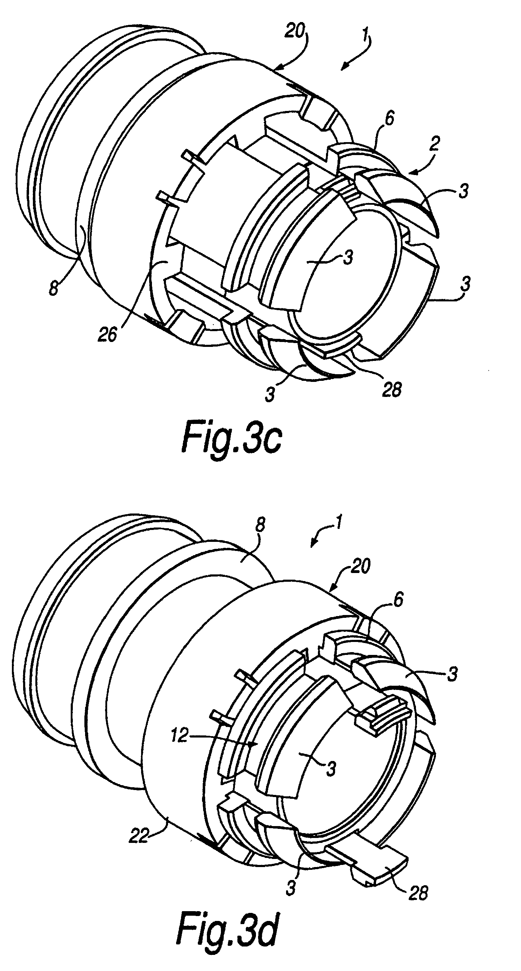

Referring to the drawings generally but in particular to Figures 1a to 1d, an anchoring device is shown at 1 and includes a main essentially cylindrical body component 2 provided with an outer barrel 4 having a forward shoulder 6 and a rear shoulder 8 spaced apart one from the other. In advance of the shoulder 6 are located four equi-angularly spaced fingers 3 arranged one in each quadrant of the barrel 4, in end view as can be seen more particularly from Figures 1b, 3c and 3d, with slots 10 therebetween thus allowing a degree of deflection. The slots 10 extend rearwardly into the barrel 4 as shown in Figure 1a. The rearward facing part of each finger 3 and the forward face of the shoulder 6, relieved at slots 10, together form an annular recess 12 for the reception and accommodation of the edge portion or portions of a plate (not shown) to which the device 1 is to be affixed. At each intersection between the recess 12 and a respective slot 10 there is provided a detent 14 for a purpose to be hereafter described.

Within the barrel 4 there is co-axially supported an inner barrel 5 of smaller diameter than the barrel 4 to provide an annulus 7 with a back end face 9 and an open forwardly facing end 11.

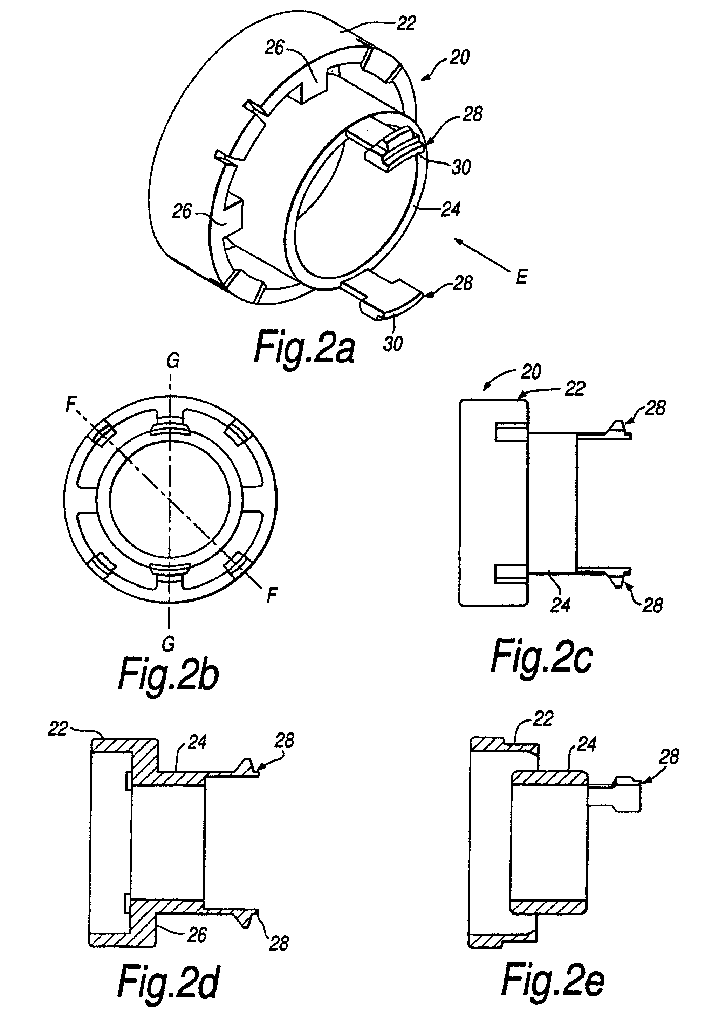

Referring now more particularly to Figures 2a to 2e, a locking sleeve component 20 is shown and includes a hollow external cylindrical sleeve 22 and a hollow internal cylindrical sleeve 24 interconnected by a spider arrangement with equi-angularly disposed radial struts 26, the struts 26 being so dimensioned as, in working relation to the component 2, to register with and be accommodated by the slots 10 in the barrel 4 as can more especially be seen from Figures 3c and 3d. The internal wall of the sleeve 22 fits in sliding manner over the external wall of the barrel 4, while the internal sleeve 24 slides within the annulus 7 of the component 2. The internal sleeve 24 of the locking sleeve component 20 is provided with diametrally opposed forward catches 28 with chamfered ends 30, which catches register with the slots 20 and are adapted in one position to locate in respective detents 14.

An open coil compression spring 32 is provided for the device and is disposed intermediate the rear shoulder 8 of the main component 2 and the rear annular surface of the outer sleeve 22 of the locking sleeve component 20, the spring serving to bias the component into a locking mode in relation to the component 2.

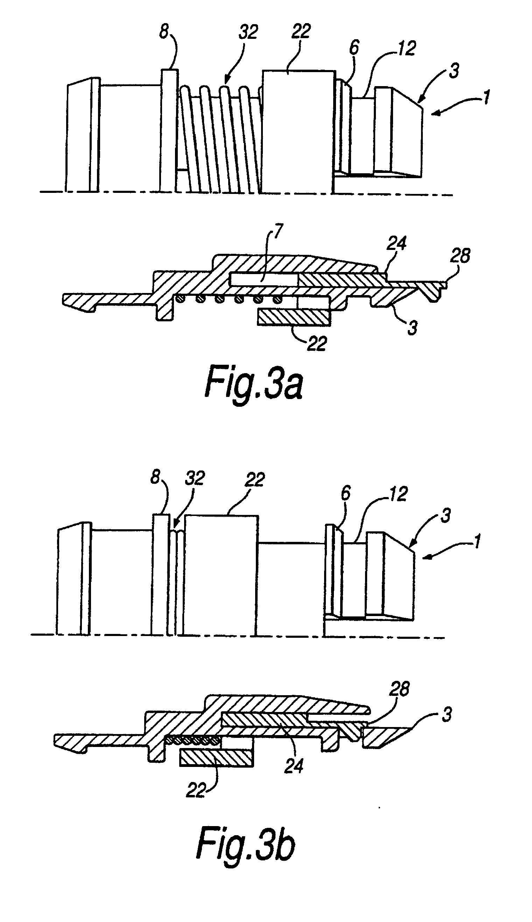

The main component 2 and the locking sleeve component 20 are assembled as shown in Figure 3 whereby the internal sleeve 24 of component 20 fits within the annulus 7 and in the locking mode the sleeve 24 as seen more particularly in Figures 3a and 3d, extends beneath the fingers 3 of the main component thereby to prevent their inward movement, such that in position on a plate (not shown) with the edge thereof registering with and accommodated within the annular recess 12, the main component is locked and cannot be withdrawn from the plate. In this locking mode. the external sleeve 22 of the component abuts the forward shoulder 6 of the main component and the component is springloaded by the spring 32 into the locking mode.

If it should be desired to remove the device 1 from the plate, the external sleeve 22 of the component 20 is moved rearwardly as viewed in the drawings, the forward catches 28 being brought together, with the sleeve 22 being pushed rearwardly against the action of the spring 32. Upon reaching the detents 14 the catches spring outwardly to register therewith thus holding the locking sleeve component 20 in its cocked position with the external cylindrical sleeve 22 abutting the rear shoulder 8 of the barrel 4. In this position, the internal cylindrical sleeve 24 has moved back from supporting the fingers 3 which are now able to move inwardly to the extent of being able to disengage the device 1 from the plate, the edge thereof dislocating from the recess 12.

When it is desired to install or reinstall the device 1 in position on the plate the fingers 3 are passed through the hole in the plate and deflect inwardly in so doing, and the locking sleeve component 20 is moved from its cocked position to its locked position. In this connection, the forward catches 28 are pushed inwardly by the side of the hole to disengage from the detents 14 thereby releasing the component 20 which then moves forward under the action of the spring 32 to reposition the internal sleeve beneath the fingers 3 to prevent them from inward movement such as would allow disengagement from the plate. In the cocked position the external sleeve 22 of the component 20 abuts the forward shoulder 6 of the barrel 4 of the main component 2.

The invention represents a simple device for the use described.

## Claims

1. A device which may be employed for anchoring a cable element so that it is temporarily fixed longitudinally in a hole in a plate element, the anchorage device (1) comprising a generally cylindrical main body (2) defining a hollow open ended in which a cable element is adapted to be fixed and held against longitudinal movement, the main body (2) having a number of projecting fingers (3) arranged around the bore, which fingers (3) can be deflected inwardly of the bore to allow the fingers (3) to be inserted into the hole in the plate and the fingers having outer surface regions shaped to define an annular recess (12) in which can be engaged edge portions of the hole in the plate after insertion of the fingers (3) in the hole, **characterised by** the anchorage further including a locking sleeve (24) which is axially movable into and out of a location which is immediately behind the insides of the fingers such as to prevent the inward deflection of the fingers (3) thereby preventing the recessed (12) outer surface regions on the fingers from being disengaged from the edge portions of the hole.

2. A device according to Claim 1 **characterised in that** the locking sleeve (20) is spring (32) biased towards its locking location directly behind the fingers (3) so as to prevent their inward deflection.

3. A device according to Claim 2 **characterised in that** the locking sleeve (20) is movable axially out of its locking location and into a 'cocked' location against the influence of the spring (32).

4. A device according to Claim 3 **characterised in that** the locking sleeve (20) is temporarily held in the 'cocked' location by means of flexible catches (28) which removably engage detents (14) in the main body.

5. A device according to Claim 4 **characterised in that** the detents (14) are in the form of apertures located in the annular recess (12) defined by the outside surfaces of the fingers (3).

6. A device according to any one of the preceding claims **characterised in that** the locking sleeve (24) is provided with a coaxial outer sleeve (22) to which it is connected by radially extending struts (26) which extend through and are movable along axially extending slots (10) between the fingers (3) of the main body.

7. A device according to Claim 2 and any claim dependent thereon **characterised in that** the spring means comprise a coil spring (32) acting on the locking sleeve (20) and acting between the latter and an abutment (8) on the main body (2).

## Patentansprüche

1. Vorrichtung zur Verankerung eines Kabelelementes in der Weise, dass es zeitweilig in Längsrichtung in einem Loch in einem Plattenelement befestigt ist, wobei die Verankerungsvorrichtung (1) einen im allgemeinen zylindrischen Hauptkörper (2) umfasst, der einen Hohlraum mit offenem Ende definiert, in dem ein Kabelelement so angepasst ist, dass es fixiert und gegen Längsbewegungen gehalten ist, wobei der Hauptkörper (2) eine Anzahl von rund um die Bohrung herum angeordneten, hervorstehenden Fingern (3) aufweist, wobei die Finger (3) nach innen biegbar sind, um die Einführung der Finger (3) in das Loch in der Platte zu ermöglichen, und wobei die Finger Außenflächenbereiche aufweisen, die so geformt sind, dass sie eine ringförmige Ausnehmung (12) definieren, in der Kantenabschnitte des Loches in der Platte nach Einführung der Finger (3) in das Loch in Eingriff bringbar sind,
**dadurch gekennzeichnet, dass**
die Verankerung weiterhin eine Arretierhülse (24) umfasst, die in eine unmittelbar hinter den Innenseiten der Finger befindliche Lage axial hinein und hinaus bewegbar ist, um das Biegen der Finger (3) nach innen zu verhindern und dadurch zu verhindern, dass die ausgesparten Außenflächenbereiche (12) auf den Fingern von den Kantenabschnitten des Loches außer Eingriff gebracht werden.

2. Vorrichtung nach Anspruch 1,
**dadurch gekennzeichnet, dass**
die Arretierhülse (20) in Richtung ihrer Arretierlage direkt hinter den Fingern (3) durch eine Feder (32) vorgespannt ist, um deren Biegen nach innen zu verhindern.

3. Vorrichtung nach Anspruch 2,
**dadurch gekennzeichnet, dass**
die Arretierhülse (20) gegen den Einfluss der Feder (32) axial aus ihrer Arretierlage heraus und in eine gespannte Lage hinein bewegbar ist.

4. Vorrichtung nach Anspruch 3,
**dadurch gekennzeichnet, dass**
die Arretierhülse (20) mittels flexibler Sperrklinken (28), die entfernbar in Sperrelementen (14) in dem Hauptkörper in Eingriff gehen, zeitweilig in der gespannten Lage gehalten wird.

5. Vorrichtung nach Anspruch 4,
**dadurch gekennzeichnet, dass**
die Sperrelemente (14) in Form von in der ringförmigen Ausnehmung (12) angeordneten Öffnungen vorhanden sind, die von den Außenflächen der Finger (3) definiert werden.

6. Vorrichtung nach einem der vorangegangenen Ansprüche,
**dadurch gekennzeichnet, dass**
die Arretierhülse (24) mit einer koaxialen Außenhülse (22) versehen ist, mit welcher sie durch sich radial erstreckende Streben (26) verbunden ist, die sich durch sich axial erstreckende Schlitze (10) zwischen den Fingern (3) des Hauptkörpers hindurch erstrecken und an diesen entlang bewegbar sind.

7. Vorrichtung nach Anspruch 2 und nach jedem davon abhängigen Anspruch,
**dadurch gekennzeichnet, dass**
die Federmittel eine auf die Arretierhülse (20) wirkende und zwischen der letzteren und einem Anschlag (8) auf dem Hauptkörper (2) wirkende Spiralfeder (32) umfassen.

## Revendications

1. Dispositif qui peut être utilisé pour ancrer un élément de câble de sorte qu'il soit temporairement fixé longitudinalement dans un trou d'un élément formant plaque, le dispositif d'ancrage (1) comportant un corps principal (2) de manière générale cylindrique définissant une extrémité ouverte creuse dans laquelle un élément de câble est adapté pour être fixé et maintenu à l'encontre d'un mouvement longitudinal, le corps principal (2) ayant plusieurs doigts en saillie (3) agencés autour de l'alésage, lesquels doigts (3) peuvent être déformés vers l'intérieur de l'alésage pour permettre aux doigts (3) d'être insérés dans le trou de la plaque, et les doigts ont des zones de surface extérieure mises en forme pour définir un évidement annulaire (12) dans lequel peuvent venir en prise des parties de bord du trou de la plaque après insertion des doigts (3) dans le trou, **caractérisé en ce que** l'ancrage comporte en outre un manchon de blocage (24) qui est axialement mobile jusqu'à un emplacement et en dehors de celui-ci qui est situé immédiatement derrière les parties intérieures des doigts de manière à empêcher la déformation vers l'intérieur des doigts (3) en empêchant ainsi que les zones de surface extérieure en creux (12) des doigts ne soient libérées des parties de bord du trou.

2. Dispositif selon la revendication 1, **caractérisé en ce que** le manchon de blocage (20) est rappelé par un ressort (32) en direction de son emplacement bloquant directement derrière les doigts (3) de manière à empêcher leur déformation vers l'intérieur.

3. Dispositif selon la revendication 2, **caractérisé en ce que** le manchon de blocage (20) est mobile axialement en dehors de son emplacement bloquant et jusqu'à un emplacement "crocheté" à l'encontre de l'influence du ressort (32).

4. Dispositif selon la revendication 3, **caractérisé en ce que** le manchon de blocage (20) est temporairement maintenu dans l'emplacement "crocheté" par l'intermédiaire de crochets souples (28) qui viennent en prise de manière amovible avec des crans (14) du corps principal.

5. Dispositif selon la revendication 4, **caractérisé en ce que** les crans (14) ont la forme d'ouvertures situées dans l'évidement annulaire (12) défini par les surfaces extérieures des doigts (3).

6. Dispositif selon l'une quelconque des revendications précédentes, **caractérisé en ce que** le manchon de verrouillage (24) est muni d'un manchon extérieur coaxial (22) auquel il est relié par des entretoises s'étendant radialement (26) qui s'étendent à travers des fentes s'étendant axialement (10) et sont mobiles le long de celles-ci, entre les doigts (3) du corps principal.

7. Dispositif selon la revendication 2 et selon l'une quelconque des revendications dépendantes de celle-ci, **caractérisé en ce que** les moyens formant ressort sont constitués d'un ressort hélicoïdal (32) agissant sur le manchon de blocage (20) et agissant entre ce dernier et une butée (8) du corps principal (2).
